# EUROPÄISCHE PATENTSCHRIFT

(11) **EP 1 632 656 B1**
(45) Veröffentlichungstag und Bekanntmachung des Hinweises auf die Patenterteilung: **10.10.2007**
(21) Anmeldenummer: 04104228.4
(22) Anmeldetag: 02.09.2004
(51) Int. Cl.: F01N 3/025, F01N 3/08, F01N 3/20

(54) **Verfahren zum Einspritzen einer Flüssigkeit in den Abgastrakt einer Vier-Takt-Brennkraftmaschine und Brennkraftmaschine zur Durchführung des Verfahrens**
Method for injecting a fluid into the exhaust system of a four-stroke internal combustion engine and internal combustion engine for carrying out the method
Procédé pour injecter un fluide dans le système d'échappement d'un moteur à combustion interne à quatre temps et moteur à combustion interne mettant en oeuvre ce procédé

(43) Veröffentlichungstag der Anmeldung: 08.03.2006
(73) Patentinhaber: Ford Global Technologies, LLC, A subsidary of Ford Motor Company, Dearborn, MI 48126 (US)
(72) Erfinder: Stalman, Rob, 52538, Selfkant (DE); Yacoub, Yasser Mohammed Sayed, 50858, Köln (DE); Moraal, Paul Eduard, 6291 VP, Vaals (NL); Bartsch, Leo, 52499, Baesweiler (DE)
(74) Vertreter: Drömer, Hans-Carsten

(56) Entgegenhaltungen:
- EP-A2- 1 174 600
- DE-A1- 19 522 165
- US-A- 5 907 950
- US-B1- 6 209 315

## Beschreibung

Die Erfindung betrifft ein Verfahren zum Einspritzen einer Flüssigkeit in den Abgastrakt einer Vier-Takt-Brennkraftmaschine mit j Zylindern, insbesondere zum Einspritzen unverbrannter Kohlenwasserstoffe zu dem Zweck der Regeneration eines Partikelfilters oder Speicherkatalysators bzw. zum Einspritzen von Reduktionsmitteln für einen SCR-Katalysator, bei dem mittels einer im Abgastrakt vorgesehenen Einspritzdüse in regelmäßigen Abständen die Flüssigkeit eingespritzt wird.

Des Weiteren betrifft die Erfindung eine Vier-Takt-Brennkraftmaschine mit j Zylindern, insbesondere zur Durchführung eines Verfahrens der oben genannten Art, bei der zum Einspritzen einer Flüssigkeit in den Abgastrakt mindestens eine Einspritzdüse im Abgastrakt angeordnet ist, wobei die mindestens eine Einspritzdüse mittels Motorsteuerung in der Art steuerbar ist, daß die mindestens eine Einspritzdüse in regelmäßigen Abständen einspritzt.

Nach dem Stand der Technik werden Brennkraftmaschinen zur Reduzierung der Schadstoffemissionen mit verschiedenen Abgasnachbehandlungssystemen ausgestattet. Zwar findet auch ohne zusätzliche Maßnahmen während der Expansion und des Ausschiebens der Zylinderfüllung bei einem ausreichenden hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen. Eventueller Sauerstoffmangel kann durch eine Sekundärlufteinblasung kompensiert werden. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Thermische Reaktoren versuchen, eine weitgehende Nachoxidation von HC und CO im Abgassystem zu erzielen, indem eine Wärmeisolation und ein ausreichend großes Volumen im Abgasrohr des Abgassystems vorgesehen wird. Die Wärmeisolation soll ein möglichst hohes Temperaturniveau durch Minimierung der Wärmeverluste sicherstellen, wohingegen ein großes Abgasrohrvolumen eine lange Verweildauer der Abgase gewährleistet. Sowohl die lange Verweildauer als auch das hohe Temperaturniveau unterstützen die angestrebte Nachoxidation. Nachteilig ist der schlechte Wirkungsgrad bei unterstöchiometrischer Verbrennung und die hohen Kosten. Für Dieselmotoren sind thermische Reaktoren aufgrund des grundsätzlich niedrigeren Temperaturniveaus nicht zielführend.

Aus den genannten Gründen kommen nach dem Stand der Technik bei Ottomotoren katalytische Reaktoren zum Einsatz, die unter Verwendung katalytischer Materialien, die die Geschwindigkeit bestimmter Reaktionen erhöhen und daher eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb (λ ≈ 1) des Ottomotors erfordert.

Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuß betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d.h. aufgrund der fehlenden Reduktionsmittel - nicht reduziert werden. Zur Reduzierung der Stickoxide werden deshalb selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz.

Letzteres wird auch als HC-Anreicherung bezeichnet, wobei die unverbrannten Kohlenwasserstoffe direkt in den Abgastrakt eingebracht werden oder aber durch innermotorische Maßnahmen, nämlich durch eine Nacheinspritzung von zusätzlichem Kraftstoff in den Brennraum nach der eigentlichen Verbrennung, zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Brennkraftmaschinen, die von der Nacheinspritzung Gebrauch machen, sind aber von Hause aus sehr anfällig im Hinblick auf die Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben der Nacheinspritzung nach spät zu. Durch die Veränderung der Schmierstoffeigenschaften des Öls hat die Ölverdünnung maßgeblich Einfluß auf den Verschleiß und die Haltbarkeit d.h. die Lebensdauer der Brennkraftmaschine.

Grundsätzlich kann den Stickoxiden auch mit sogenannten Stickoxidspeicherkatalysatoren entgegengetreten werden. Dabei werden die Stickoxide zunächst während einer Speicherphase im Katalysator gesammelt, um dann während einer Regenerationsphase mittels eines unterstöchiometrischen Betriebs ( beispielsweise λ < 0,95) der Brennkraftmaschine reduziert zu werden.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei unter anderem durch den Abgasgegendruck, der sich infolge des zunehmenden Strömungswiderstandes des Filters aufgrund der anwachsenden Partikelmasse im Filter einstellt, bestimmt.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muß auf zusätzliche Maßnahmen zurückgegriffen werden, um eine Regeneration des Filters unter allen Betriebsbedingungen zu gewährleisten.

Die Verbrennung der Partikel kann dabei durch im Abgastrakt vorgesehene Zusatzbrenner erfolgen oder aber durch die - bereits oben angesprochene - Nacheinspritzung von zusätzlichem Kraftstoff in den Brennraum. Dabei kann der nacheingespritzte Kraftstoff entweder bereits im Brennraum gezündet werden, was durch die auslaufende Hauptverbrennung oder die gegen Ende der Verbrennung im Brennraum vorliegenden hohen Temperaturen geschehen kann, so daß die Abgastemperatur der in den Abgastrakt ausgeschobenen Abgase innermotorisch angehoben wird. Nachteilig an dieser Vorgehensweise sind insbesondere die im Abgastrakt auf dem Weg zum Filter zu befürchtenden Wärmeverluste und die damit verbundene Temperaturabsenkung der heißen Abgase. Der Filter kann ohne weiteres einen Meter und mehr vom Auslaß des Brennraums entfernt im Abgastrakt angeordnet sein.

Der Kompensation der Wärmeverluste durch die Generierung entsprechend hoher Abgastemperaturen sind durch die Temperaturfestigkeit anderer im Abgasstrang vorgesehener Bauteile Grenzen gesetzt, insbesondere der Temperaturbeständigkeit einer im Abgassystem angeordneten Turbine eines Abgasturboladers, eines Dreiwegekatalysators oder eines Speicherkatalysators. Üblicherweise wird die Turbine mit den höchsten Temperaturen beaufschlagt, da sie am nächsten am Auslaß des Brennraums angeordnet ist.

Oder aber der nacheingespritzte Kraftstoff gelangt während des Ladungswechsels unverbrannt aber gegebenenfalls schon aufbereitet in den Abgastrakt und wird gezielt lokal dort im Abgassystem oxidiert, wo hohe Abgastemperaturen notwendig sind, nämlich im Partikelfilter bzw. in seiner unmittelbaren Nachbarschaft. Die Verbrennung des nacheingespritzten Kraftstoffes kann katalytisch mittels eines vor dem Filter positionierten Katalysators initiiert werden. Es kann aber auch eine elektrische Zündung in bzw. an dem Rußfilter vorgesehen werden.

Dieser Vorgehensweise werden dadurch Grenzen gesetzt, daß sowohl der Partikelfilter als auch ein gegebenenfalls vorgesehener Katalysator nicht unbeschränkt große Temperaturgradienten zulassen. So sollte der Temperaturunterschied zwischen dem Eingang und dem Ausgang eines Katalysators nicht mehr als 250°C betragen, da ansonsten das aus Keramik bestehende Substrat des Katalysators aufgrund der sich einstellenden thermischen Spannungen zerstört wird.

Die Nacheinspritzung bringt in jedem Fall die bereits weiter oben erörterten Nachteile mit sich, insbesondere eine unerwünschte Ölverdünnung. Des weiteren hat es sich in der Praxis als schwierig und äußerst aufwendig erwiesen, die Nacheinspritzung in der Art zu steuern, das bei der Aufnahme des Betriebes mit Nacheinspritzung und der Beendigung keine Schwankungen im Drehmomentangebot auftreten.

Ähnlich wie bereits für die Reduzierung der Stickoxide vorgeschlagen, kann auch Kraftstoff direkt in den Abgastrakt eingebracht werden. Die weitere Vorgehensweise entspricht der zuvor Beschriebenen, bei der der nacheingespritzte Kraftstoff unverbrannt in das Abgassystem gelangt und gezielt in der Nachbarschaft des Partikelfilters oxidiert wird. Dementsprechend leidet dieses Konzept auch an denselben Nachteilen.

Insbesondere muß darauf geachtet werden, daß die zulässigen Temperaturgradienten der Katalysatoren und/oder Filter nicht überschritten werden. Zielführend ist dabei eine möglichst genaue Dosierung des in den Abgastrakt eingespritzten Kraftstoffes. Letztendlich wird die zusätzliche Wärmemenge, die durch eine lokale exotherme Reaktion im Abgastrakt freigesetzt werden soll, durch die Menge an eingespritztem Kraftstoff bestimmt bzw. gesteuert. Der Umfang der Temperaturerhöhung kann folglich durch die Kraftstoffmenge eingestellt werden.

Nach dem Stand der Technik wird in Abhängigkeit vom Betriebspunkt der Brennkraftmaschine, d. h. in Abhängigkeit von der momentanen Last und der momentanen Drehzahl, beispielsweise im Abstand von 1,5 Millisekunden - also zeitsynchron - eine bestimmte Menge Kraftstoff in den Abgastrakt eingespritzt, wobei auf die Kraftstoffmenge über den Einspritzdruck und die Einspritzdauer Einfluß genommen wird. Die Praxis hat gezeigt, daß auf diese Weise die Menge des eingespritzten Kraftstoffes nur sehr ungenau gesteuert werden kann und von Einspritzug zu Einspritzung variiert. Ursächlich hierfür ist, daß die zugeführte Kraftstoffmenge maßgeblich von dem im Abgasrohr vor der Einspritzdüse vorliegenden Abgasgegendruck bzw. der Differenz zwischen Einspritzdruck und Abgasgegendruck mitbestimmt wird. Im Abgasrohr liegt aber kein konstanter Druck vor.

Die intermittierende Verbrennung einer herkömmlichen 4-Takt-Hubkolben-Brennkraftmaschine führt zusammen mit dem mittels Ventilen gesteuerten Ladungswechsel sowohl im Ansaugtrakt als auch im Abgastrakt zu sehr ungleichförmigen dynamischen Strömungsvorgängen der jeweiligen gasförmigen Medien, nämlich der Verbrennungsluft bzw. des Frischgemisches einerseits und den Abgasen andererseits.

Während des Ladungswechsels werden die heißen Abgase durch die Auslaßöffnungen des Brennraums in den Abgastrakt ausgeschoben und frische Verbrennungsluft gegebenenfalls zusammen mit bereits eingespritztem Kraftstoff wird über die Einlaßöffnungen des Brennraums aus dem Ansaugtrakt angesaugt. Der Druck des Abgases variiert dabei entlang des Strömungsweges im Abgasrohr. Derartige lokale Druckstörungen breiten sich in gasförmigen Medien als Wellen aus, idealerweise als sinusförmige Wellen.

Wird nun - wie oben bereits beschrieben - zeitsynchron Kraftstoff in den Abgastrakt eingespritzt, herrscht mal ein hoher Abgasgegendruck an den Öffnungen der Einspritzdüse und mal ein weniger hoher Abgasgegendruck. Folglich variiert die zugeführte Kraftstoffmenge mit jeder Einspritzung infolge des geänderten Druckniveaus im Abgastrakt bzw. an der Einspritzdüse.

Die Problematik, genau definierte Mengen an Flüssigkeit in den Abgastrakt einspritzen zu müssen, ist nicht ausschließlich ein Merkmal der Partikelfilter, die den eingespritzten Kraftstoff zum Zwecke ihrer Regeneration benötigen.

Auch bei den Abgasnachbehandlungssystemen für Stickoxide, die weiter oben bereits erörtert wurden, besteht diese Problematik. So muß ein Stickoxidspeicherkatalysator während seiner Regenerationsphase unterstöchiometrisch betrieben werden (beispielsweise λ < 0,95), damit die Stickoxide reduziert werden. Hierzu kann Kraftstoff direkt in den Abgastrakt vor den Speicherkatalysator eingespritzt werden. Zur Einstellung des gewünschten Luftverhältnisses muß die Menge des eingespritzten Kraftstoffes genau einstellbar sein.

Selektive Katalysatoren d.h. SCR-Katalysatoren, bei denen gezielt Reduktionsmittel in das Abgas eingebracht wird, um die Stickoxide selektiv zu vermindern, benötigen ebenfalls die Zufuhr exakt dosierter Flüssigkeitsmengen. Die Flüssigkeiten sind dabei die in Frage kommenden Reduktionsmittel, insbesondere also Ammoniak, Harnstoff und auch unverbrannte Kohlenwasserstoffe.

Zusammenfassend kann festgehalten werden, daß sowohl die innermotorischen Maßnahmen, insbesondere die Nacheinspritzung von Kraftstoff in den Brennraum, als auch das Einbringen zusätzlichen Kraftstoffes direkt in den Abgastrakt wesentliche Nachteile im Hinblick auf eine gezielte Temperaturerhöhung zum Zwecke der Regeneration eines Partikelfilters aufweisen.

In diesem Zusammenhang und darüber hinaus - insbesondere im Hinblick auf Speicherkatalysatoren und SCR-Katalysatoren - besteht Bedarf an einem Verfahren, mit dem eine möglichst genau dosierte Flüssigkeitsmenge in den Abgastrakt eingebracht werden kann.

Vor diesem Hintergrund ist es die Aufgabe der vorliegenden Erfindung, ein Verfahren zum Einspritzen einer Flüssigkeit in den Abgastrakt einer Vier-Takt-Brennkraftmaschine mit j Zylindern aufzuzeigen, mit dem die nach dem Stand der Technik bekannten Nachteile überwunden werden, und mit dem insbesondere eine möglichst genau dosierte Flüssigkeitsmenge in den Abgastrakt eingebracht werden kann.

Eine weitere Teilaufgabe der vorliegenden Erfindung ist es, eine Brennkraftmaschine mit j Zylindern zur Durchführung eines derartigen Verfahrens bereitzustellen.

Gelöst wird die erste Teilaufgabe durch ein Verfahren zum Einspritzen einer Flüssigkeit in den Abgastrakt einer Vier-Takt-Brennkraftmaschine mit j Zylindern, insbesondere zum Einspritzen unverbrannter Kohlenwasserstoffe zu dem Zweck der Regeneration eines Partikelfilters oder Speicherkatalysators bzw. zum Einspritzen von Reduktionsmitteln für einen SCR-Katalysator, bei dem mittels einer im Abgastrakt vorgesehenen Einspritzdüse in regelmäßigen Abständen die Flüssigkeit eingespritzt wird, und das dadurch gekennzeichnet ist, daß die Einspritzungen der Flüssigkeit bezogen auf einen Zylinder winkelsynchron d.h. in regelmäßigen Abständen von 720°KW vorgenommen werden, so daß bei jeder Einspritzung - konstante Drehzahl und konstante Last vorausgesetzt - nahezu gleiche Bedingungen im Abgastrakt an der Einspritzdüse vorliegen.

Gemäß dem erfindungsgemäßen Verfahren werden die Einspritzungen in regelmäßigen Abständen vorgenommen, aber nicht - wie nach dem Stand der Technik - in konstanten Zeitabständen d.h. zeitsynchron, sondern in konstanten Winkelabständen d.h. winkelsynchron.

Diese Vorgehensweise führt dazu, daß während jeder Einspritzung nahezu dieselben thermodynamischen Verhältnisse an der Einspritzdüse vorliegen, insbesondere derselbe Druck bzw. Unterdruck. Voraussetzung ist allerdings, daß bei dieser Betrachtung die Drehzahl und die Last konstant gehalten werden, da die dynamischen Strömungsvorgänge im Abgastrakt maßgeblich von der Drehzahl und der Last mitbestimmt werden. Insbesondere die Steuerzeiten der Ladungswechselorgane, beispielsweise der Ventile, die für verschiedene Betriebspunkte der Brennkraftmaschine unterschiedlich sein können und in der Regel sind, beeinflussen die Wellenvorgänge im Abgastrakt erheblich.

Wird beispielsweise bei einer Drehzahl n = 2000 U/min und einer Last bzw. einem effektivem Mitteldruck pₘₑ = 6 bar alle 720°KW eingespritzt, sind die mit jeder Einspritzung zugeführten Flüssigkeitsmengen nahezu gleich groß. Ändern sich dann aber Drehzahl oder Last und damit der Betriebspunkt, dann ändern sich auch die thermodynamischen Verhältnisse an der Einspritzdüse, wodurch sich auch die Kraftstoffmenge infolge des geänderten Abgasgegendruckes ändert, wenn bei dem gleichen Kurbelwinkel eingespritzt wird wie vorher.

Der Kern der vorliegenden Erfindung besteht demnach darin, daß bei den Einspritzungen im wesentlichen gleichgroße Flüssigkeitsmengen generiert bzw. zugeführt werden, indem die Einspritzzeitpunkte der einzelnen Einspritzungen aufeinander abgestimmt werden, so daß während der Einspritzungen nahezu gleichgroße Abgasgegendrücke an der Einspritzdüse vorliegen. Zielführend ist deshalb - bei der Betrachtung eines einzelnen Zylinders - die Einspritzung alle 720°KW. Dies führt auch bei Mehrzylindermotoren zu dem gewünschten Ergebnis. Darüber hinaus kann bei Mehrzylindermotoren mit beispielsweise j Zylindern aber auch j-mal auf 720°KW eingespritzt werden, da die j Zylinder versetzt betrieben werden, so daß bei zwei Kurbelwellenumdrehungen d.h. 720°KW jeder Abschnitt eines Arbeitsspieles j-mal durchlaufen wird, wodurch sich auch jeder diskrete thermodynamische Zustand an der Einspritzdüse auf 720°KW j-mal wiederholt bzw. einstellt.

Bei einem Vier-Zylinder-Reihenmotor, bei dem die Kröpfungen der Kurbelwelle um jeweils 180°KW versetzt auf der Kurbelwelle angeordnet sind, könnte auf zwei Kurbelwellenumdrehungen viermal (j = 4) eingespritzt werden und zwar jeweils um 180°KW versetzt. Bezogen auf einen Zylinder wird nach wie vor in regelmäßigen Abständen von 720°KW eingespritzt.

Die Menge an in den Abgastrakt eingespritzter Flüssigkeit wird im wesentlichen über den Einspritzdruck, die Einspritzdauer und den Abgasgegendruck im Abgasrohr bestimmt bzw. festgelegt. Nach dem Stand der Technik bleibt der Abgasgegendruck insbesondere aber die durch die zeitdiskrete Natur des Ladungswechsels bedingten - teilweise großen - Schwankungen im Abgasgegendruck als maßgebliche Einflußgröße auf die Kraftstoffmenge außer Betracht. Erfindungsgemäß wird nun winkelsynchron eingespritzt, so daß der Abgasgegendruck an der Einspritzdüse bei jeder Einspritzung gleichgroß, zumindest aber ähnlich groß ist.

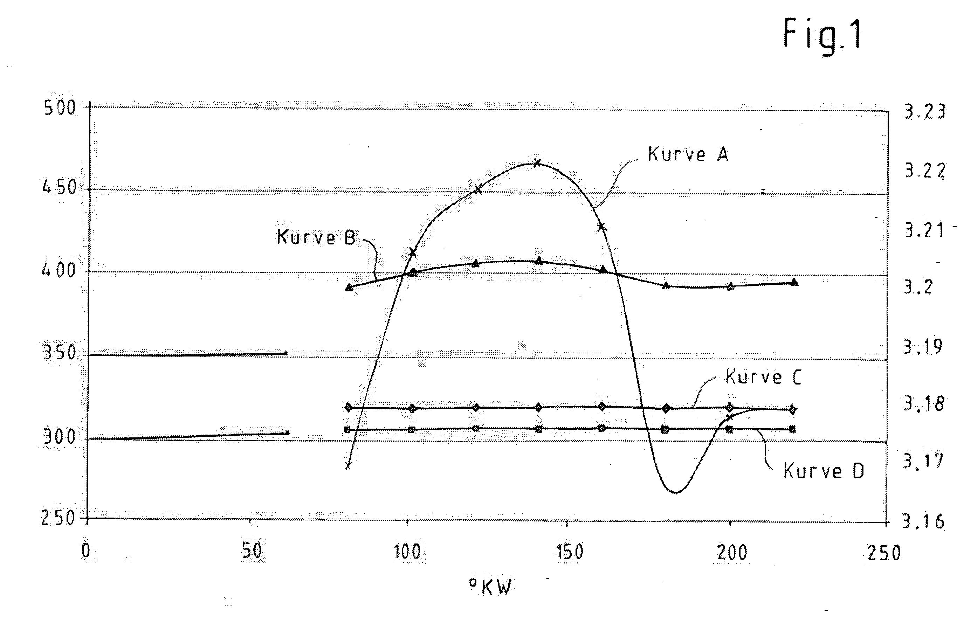

Figur 1 zeigt beispielhaft den Einfluß des Abgasgegendruckes im Abgasrohr auf die eingespritzte Kraftstoffmenge, welche durch Oxidation in einem Katalysator zur Temperaturerhöhung zum Zwecke einer Filterregeneration beitragen soll. Dargestellt ist für einen bestimmten Betriebspunkt - d. h. für eine konstante Drehzahl und eine konstante Last - die Kraftstoffmenge (Kurve A) in Abhängigkeit vom Einspritzwinkel, wobei der Einspritzdruck und die Einspritzdauer konstant gehalten wurden. Der Einspritzwinkel wird ausgehend von der Steuerzeit "Auslaß öffnet" in °KW aufwärts gezählt.

Die Kraftstoffmenge (Kurve A) nimmt zunächst stark zu, um dann ebenso schnell wieder abzunehmen. Korrespondierend hierzu verläuft die hinter dem im Abgasstrang angeordneten Katalysator gemessene Abgastemperatur (Kurve B). Mit zunehmender Kraftstoffmenge steigt auch die Abgastemperatur. Umgekehrt sinkt die Abgastemperatur mit abnehmender Kraftstoffmenge.

Ebenfalls eingezeichnet ist die Abgastemperatur vor dem Katalysator (Kurve D) und die Abgastemperatur nach einer im Abgastrakt vorgesehenen Turbine (Kurve C). Diese beiden Temperaturen bleiben erwartungsgemäß unbeeinflußt von der Kraftstoffeinspritzung, da die Turbine stromaufwärts des Katalysators angeordnet ist und der eingespritzte Kraftstoff mittels des Katalysators oxidiert wird, so daß eine Temperaturerhöhung infolge der bei dieser exothermen Reaktion freigesetzten Wärme erst hinter dem Katalysator spürbar ist.

Das erfindungsgemäße Verfahren, Flüssigkeiten winkelsynchron einzuspritzen, bietet weitere Vorteile, insbesondere im Zusammenhang mit einer Kraftstoffpumpe, die den Kraftstoff gewissermaßen winkelsynchron fördert. Viele Kraftstoffpumpen fördern den Kraftstoff mittels eines in einem Rohr bzw. in einer Leitung oszillierenden Kolbens. In dem im Rohr befindlichen Kraftstoff laufen dabei dynamische Strömungsvorgänge ab, die den oben für den Abgastrakt beschriebenen Wellenvorgängen ähnlich sind. Da die Kraftstoffpumpe - wie andere Nebenaggregate auch - über die Kurbelwelle angetrieben wird, liegen, wenn die Kurbelwelle rotiert, bei einem bestimmten Kurbelwellenwinkel jedes Mal nahezu dieselben thermodynamischen Verhältnisse in der Kraftstoffleitung vor. Diese in Abhängigkeit vom Kurbelwinkel in etwa konstanten Verhältnisse auf Seiten der Kraftstoff- bzw. Einspritzpumpe könne in vorteilhafter Weise genutzt werden.

Wird demnach bezogen auf einen Zylinder - wie erfindungsgemäß vorgeschlagen - alle 720°KW eingespritzt, liegt nicht nur ein nahezu gleichgroßer Abgasgegendruck an der Einspritzdüse vor, sondern auch ein nahezu gleichgroßer Einspritzdruck in der Kraftstoffleitung bzw. an der Einspritzdüse.

Dadurch wird die erste der Erfindung zugrunde liegende Aufgabe gelöst, nämlich ein Verfahren zum Einspritzen einer Flüssigkeit in den Abgastrakt einer Vier-Takt-Brennkraftmaschine aufzuzeigen, mit dem insbesondere eine möglichst genau dosierte Flüssigkeitsmenge in den Abgastrakt eingebracht werden kann. Dadurch kann beispielsweise die Temperaturerhöhung mittels eingespritztem Kraftstoff zum Zwecke der Filterregeneration besser gesteuert werden.

Weitere Vorteile des erfindungsgemäßen Verfahrens werden im Zusammenhang mit den Ausführungsformen gemäß den Unteransprüchen erörtert.

Vorteilhaft sind - wie bereits oben erwähnt - Ausführungsformen des Verfahrens, bei denen auf zwei Kurbelwellenumdrehungen j Einspritzungen vorgenommen werden. Diese Verfahrensvariante nutzt den Umstand, daß bei einer Mehrzylinder-Brennkraftmaschine j Zylinder versetzt bei gleicher Drehzahl und gleicher Last betrieben werden, so daß sich auf 720 °KW j-mal ein thermodynamisch vergleichbarer Zustand an der Einspritzdüse einstellt.

So wird auf 720 °KW j-mal ein Auslaß geöffnet, so daß die Einspritzdüse j-mal von einem Vorlastausstoß, der sich durch eine Drucküberhöhung auszeichnet, passiert wird.

An dieser Stelle sei angemerkt, daß die am Beispiel eines Vier-Zylinder-Reihenmotors angestellten Überlegungen auf andere Motoren übertragbar sind. Und zwar in der Weise, daß bei einer Mehrzylinder-Brennkraftmaschine mit j-Zylindern die j Zylinder in mindestens zwei Zylindergruppen aufgeteilt werden.

So können beispielsweise die j Zylinder einer Brennkraftmaschine, bei der die Zylinder V-förmig angeordnet sind, in der Weise aufgeteilt werden, daß jede Zylinderbank eine Zylindergruppe mit j/2 Zylindern bildet, die mit einem separaten Abgasrohr ausgestattet wird.

Erfindungsgemäß werden dann in jedem der beiden separaten Abgasrohre auf zwei Kurbelwellenumdrehungen j/2 Einspritzungen vorgenommen. In der Summe werden unverändert auf zwei Kurbelwellenumdrehungen insgesamt j Einspritzungen vorgenommen.

Vorteilhaft sind Ausführungsformen des Verfahrens, bei denen die Einspritzung der Flüssigkeit vorgenommen wird, wenn eine durch den Abgastrakt sich fortpflanzende Druckwelle im Bereich der Einspritzdüse ein Maximum oder ein Minimum aufweist. Die sich in den Abgastrakt fortpflanzende Druckwelle ist idealerweise sinusförmig. Wird nun - wie von der bevorzugten Ausführungsform vorgeschlagen - bei maximalem bzw. minimalem Druck eingespritzt, hat ein zu frühes bzw. zu spätes Einspritzen nur geringe Abweichungen in der Dosierung der Flüssigkeitsmenge zur Folge, da die Sinuskurve beim Durchschreiten und in der Nähe ihres Maximums und Minimums die kleinsten Gradienten aufweist. Die vorgeschlagene Variante des erfindungsgemäßen Verfahrens eignet sich daher insbesondere für eine möglichst exakte Dosierung, wobei hohe Drücke die Aufbereitung der eingespritzten Flüssigkeit, insbesondere die Verdampfung von Kraftstoff, begünstigen.

Vorteilhaft sind Ausführungsformen des Verfahrens, bei denen die Einspritzung der Flüssigkeit vorgenommen wird, wenn eine die Einspritzdüse passierende pulsierende Abgasströmung im Bereich der Einspritzdüse eine maximale Temperatur aufweist. In der Regel folgt die Temperaturwelle versetzt der sich durch den Abgastrakt fortpflanzenden Druckwelle. In einer Vielzahl von Betriebspunkten kann daher bei maximaler Temperatur und gleichzeitig im Bereich eines Druckmaximums eingespritzt werden. Eine hohe Temperatur unterstützt die Aufbereitung der eingespritzten Flüssigkeit, insbesondere die Verdampfung von eingespritztem Kraftstoff und leitet in bestimmten Anwendungsfällen auch bereits gewünschte Vorreaktionen ein.

Soll eine Erhöhung der Abgastemperatur zum Zwecke der Regeneration eines Partikelfilters vorgenommen werden, sind Ausführungsformen des Verfahrens zum Einspritzen von Kraftstoff vorteilhaft, bei denen die Abgastemperatur durch Oxidation des eingespritzten Kraftstoffes erhöht wird, und die dadurch gekennzeichnet sind, daß die Erhöhung der Abgastemperatur durch innermotorische Maßnahmen unterstützt wird.

Wie bereits in der Beschreibungseinleitung ausgeführt wurde, sind innermotorische Maßnahmen alleine für sich genommen nicht zielführend. Als wesentlicher Nachteil ist hinsichtlich der Nacheinspritzung von Kraftstoff insbesondere die Ölverdünnung zu nennen, die mit einer zunehmenden Menge an nacheingespritztem Kraftstoff ansteigt.

Werden aber - wie von der in Rede stehenden Ausführungsform vorgeschlagen - die innermotorischen Maßnahmen nur zur Unterstützung herangezogen d.h. in Kombination mit in den Abgastrakt vorzunehmenden Einspritzungen angewendet, so können beide Maßnahmen im Zusammenspiel zu dem angestrebten Ergebnis führen, so daß sich die aus dem Stand der Technik bekannten Nachteile auch nur in einem vertretbaren Maße einstellen.

Vorteilhaft sind aus diesem Grund beispielsweise Ausführungsformen des Verfahrens, bei denen die Erhöhung der Abgastemperatur durch mindestens eine Nacheinspritzung von Kraftstoff in den Brennraum unterstützt wird, vorzugsweise während der Expansionsphase eines Arbeitsspiels. Eine erste Temperaturerhöhung kann auf diese Weise mittels einer in den Brennraum nacheingespritzten Kraftstoffmenge erzielt werden, so daß das Temperaturniveau im Abgastrakt im Vergleich zum normalen Betrieb der Brennkraftmaschine bereits angehoben wird, bevor mittels in den Abgastrakt eingespritztem Kraftstoff eine zweite Temperaturerhöhung durch eine lokale exotherme Reaktion eingeleitet wird.

Vorteilhaft sind in diesem Zusammenhang aber auch Ausführungsformen des Verfahrens, bei denen die Erhöhung der Abgastemperatur durch eine Abgasrückführung (AGR) unterstützt wird. Durch die Rückführung von Abgas wird die Verbrennung im allgemeinen verzögert und das Temperaturniveau insgesamt gesenkt. Durch die Verzögerung der Verbrennung verschiebt sich aber der Schwerpunkt der Verbrennung nach spät d.h. in Richtung der Steuerzeiten, zu denen die Auslaßventile öffnen. Unter Umständen d.h. in Abhängigkeit von der aktuellen AGR-Rate kann sich die Verbrennung des Kraftstoff-Luft-Gemisches bis in den Abgastrakt hinein erstrecken, so daß mittels Abgasrückführung eine Erhöhung der Abgastemperatur erzielt werden kann.

Bei Dieselmotoren sind Ausführungsformen des Verfahrens vorteilhaft, bei denen die Erhöhung der Abgastemperatur durch eine verstärkte Drosselung im Ansaugtrakt des Dieselmotors unterstützt wird. Moderne Dieselmotoren sind in der Regel mit einer Drosselklappe im Ansaugtrakt ausgestattet, um beim Abschalten des Motors ein unerwünschtes Nachlaufen zu verhindern. Hierzu wird beim Abschalten des Motors die Drosselklappe geschlossen und die Frischluftzufuhr unterbunden.

Diese Drosselklappe wird gemäß der vorgeschlagenen Verfahrensvariante nun dazu verwendet, gezielt die Temperatur des Abgases zu erhöhen, indem die Brennkraftmaschine durch eine Drosselung im Ansaugtrakt veranlaßt wird, mehr Kraftstoff einzuspritzen, um dieselbe Leistung verfügbar zu machen. Dies führt zwangsläufig zu der gewollten Temperaturerhöhung des Abgases.

Vorteilhaft sind Ausführungsformen des Verfahrens, bei denen der eingespritzte Kraftstoff zumindest teilweise mittels eines Katalysators oxidiert wird. Die im Katalysator vorhandenen Katalysatormaterialien bewirken, daß die Oxidation des Kraftstoffes bei tieferen Temperaturen ablaufen kann. Der Katalysator ist zudem ein bereits vorhandenes Bauteil, welches vorteilhafterweise zur Einleitung der Verbrennung des eingespritzten Kraftstoffes verwendet werden kann.

Vorteilhaft sind Ausführungsformen des Verfahrens, bei denen der Kraftstoff stromaufwärts einer im Abgastrakt vorgesehenen Turbine eingespritzt wird. In der Regel wird die Turbine des Abgasturboladers möglichst nahe am Auslaß der Brennkraftmaschine angeordnet, um möglichst hohe Temperaturen am Turbineneintritt zu gewährleisten und auf diese Weise eine optimale Ausnutzung der Abgasenthalpie sicherzustellen.

Die hohen Temperaturen am Turbineneintritt können aber ebenfalls im Rahmen der hier vorliegenden Erfindung zur Aufbereitung des eingespritzten Kraftstoffes genutzt werden.

Vorteilhaft sind auch Ausführungsformen des Verfahrens, bei denen der Kraftstoff stromabwärts einer im Abgastrakt vorgesehenen Turbine eingespritzt wird. Diese Variante kann vorteilhaft sein, falls beispielsweise nicht genügend Bauraum für die Montage einer Einspritzdüse zwischen Turbine und Brennkraftmaschine vorhanden ist.

Die zweite der Erfindung zugrundeliegende Teilaufgabe wird gelöst durch eine Vier-Takt-Brennkraftmaschine mit j Zylindern, bei der zum Einspritzen einer Flüssigkeit in den Abgastrakt mindestens eine Einspritzdüse im Abgastrakt angeordnet ist, wobei die mindestens eine Einspritzdüse mittels Motorsteuerung in der Art steuerbar ist, daß die mindestens eine Einspritzdüse in regelmäßigen Abständen einspritzt, und die dadurch gekennzeichnet ist, daß ein Kurbelwellensensor vorgesehen ist, der mit der Motorsteuerung in Verbindung steht und Informationen über die Kurbelwellenstellung als Eingangssignal an die Motorsteuerung liefert, wobei die Kurbelwellenstellung in der Art zur Steuerung der mindestens einen Einspritzdüse dient, daß die mindestens eine Einspritzdüse bezogen auf einen Zylinder in regelmäßigen Abständen von 720°KW öffnet bzw. schließt.

Das bereits für das erfindungsgemäße Verfahren Gesagte gilt auch für die erfindungsgemäße Brennkraftmaschine.

Erfindungsgemäß wird die mindestens eine Einspritzdüse in regelmäßigen Winkelabständen geöffnet bzw. geschlossen d. h. winkelsynchron gesteuert. Um dies zu erreichen, ist die mindestens eine Einspritzdüse mit der Motorsteuerung zu verbinden. Des weiteren müssen der Motorsteuerung Informationen über die Kurbelwellenstellung zur Verfügung gestellt werden. Diese Aufgabe übernimmt ein - in der Regel am Schwungrad angeordneter - Kurbelwellensensor, der gegebenenfalls zusammen mit einem Nockenwellensensor die erforderlichen Eingangsignale liefert.

Das vom Kurbelwellensensor erzeugte Signal wird von der Motorsteuerung zur Berechnung der Drehzahl und der Winkelstellung der Kurbelwelle benötigt. Diese Daten benötigt die Motorsteuerung für die Berechnung der Zündeinstellung, der Kraftstoffeinspritzung und der Kraftstoffmenge unter sämtlichen Betriebsbedingungen der Brennkraftmaschine, wobei diese Informationen bei der erfindungsgemäßen Brennkraftmaschine auch dazu verwendet werden, die mindestens eine Einspritzdüse im Abgastrakt winkelsynchron zu steuern.

Vorteilhaft sind Ausführungsformen der Brennkraftmaschine, bei denen eine Turbine im Abgastrakt vorgesehen ist und die mindestens eine Einspritzdüse stromaufwärts der Turbine angeordnet ist.

Vorteilhaft sind auch Ausführungsformen der Brennkraftmaschine, bei denen eine Turbine im Abgastrakt vorgesehen ist und die mindestens eine Einspritzdüse stromabwärts der Turbine angeordnet ist.

Die Vorteile der beiden zuletzt genannten Ausführungsformen der Brennkraftmaschine wurden bereits im Zusammenhang mit dem erfindungsgemäßen Verfahren erörtert, weshalb an dieser Stelle auf diese Ausführungen bezug genommen wird.

Vorteilhaft sind Ausführungsformen der Brennkraftmaschine, bei denen im Abgastrakt ein Katalysator und stromabwärts des Katalysators ein Partikelfilter angeordnet ist, wobei die mindestens eine Einspritzdüse stromaufwärts des Katalysators angeordnet ist, so daß ein mittels der mindestens einen Einspritzdüse eingespritzter Kraftstoff mit dem Katalysator oxidierbar ist.

Mittels der im Katalysator vorhandenen katalytischen Materialien wird die Oxidation bzw. Verbrennung des eingespritzten Kraftstoffes in vorteilhafter Weise unterstützt bzw. eingeleitet. Zudem findet die exotherme Reaktion in unmittelbarer Nähe zu dem Partikelfilter statt, nämlich im Bereich zwischen dem Katalysatoraustritt und dem Partikelfiltereintritt. Die durch die Oxidation freigesetzte Wärme wird damit an der Stelle verfügbar gemacht, an der eine Temperaturerhöhung des Abgases am effektivsten wirkt, da einer anschließenden Temperaturabsenkung infolge Wärmabgabe weder Zeit noch Raum eingeräumt wird.

Vorteilhaft sind Ausführungsformen der Brennkraftmaschine, bei denen im Abgastrakt ein System zur Abgasnachbehandlung von Stickoxiden vorgesehen wird, nämlich ein Stickoxidspeicherkatalysator oder ein SCR-Katalysator, wobei stromaufwärts dieses Systems eine Einspritzdüse vorgesehen ist.

Diese Ausführungsform ist insbesondere vorteilhaft in Zusammenhang mit der zuvor beschriebenen Ausführungsform. Eine Brennkraftmaschine kann beispielsweise zur Nachbehandlung des Abgases mit einem Partikelfilter und einem Speicherkatalysator ausgestattet sein. Jedes dieser Systeme wird dann mit einem Einspritzsystem bzw. einer Einspritzdüse ausgerüstet. Die Regeneration des Speicherkatalysators und die Regeneration des Filters kann dadurch entkoppelt werden d.h. jede Regeneration kann separat für sich vorgenommen werden. Dies ist nach dem Stand der Technik mittels Nacheinspritzung in den Brennraum oder dergleichen nicht möglich.

### Bezugszeichen

- AGR: Abgasrückführung
- j: Anzahl der Zylinder
- KW: Kurbelwinkel
- n: Drehzahl
- pₘₑ: effektiver Mitteldruck
- SCR: Selective Catalytic Reduction

## Patentansprüche

1. Verfahren zum Einspritzen einer Flüssigkeit in den Abgastrakt einer Vier-Takt-Brennkraftmaschine mit j Zylindern, zu dem Zweck der Regeneration eines Partikelfilters oder Speicherkatalysators, bzw. zum Einspritzen von Reduktionsmitteln für einen SCR-Katalysator, bei dem mittels einer im Abgastrakt vorgesehenen Einspritzdüse in regelmäßigen Abständen die Flüssigkeit eingespritzt wird,
**dadurch gekennzeichnet, daß**
die Einspritzungen der Flüssigkeit bezogen auf einen Zylinder winkelsynchron d. h. in regelmäßigen Abständen von 720°KW vorgenommen werden, so daß bei jeder Einspritzung - konstante Drehzahl und konstante Last vorausgesetzt - nahezu gleiche Bedingungen im Abgastrakt an der Einspritzdüse vorliegen.

2. Verfahren nach Anspruch 1,
**dadurch gekennzeichnet, daß**
auf zwei Kurbelwellenumdrehungen j Einspritzungen vorgenommen werden.

3. Verfahren nach Anspruch 1 oder 2,
**dadurch gekennzeichnet, daß**
die Einspritzung der Flüssigkeit vorgenommen wird, wenn eine durch den Abgastrakt sich fortpflanzende Druckwelle im Bereich der Einspritzdüse ein Maximum oder ein Minimum aufweist.

4. Verfahren nach einem der vorherigen Ansprüche,
**dadurch gekennzeichnet, daß**
die Einspritzung der Flüssigkeit vorgenommen wird, wenn eine die Einspritzdüse passierende pulsierende Abgasströmung im Bereich der Einspritzdüse eine maximale Temperatur aufweist.

5. Verfahren zum Einspritzen einer Flüssigkeit in den Abgastrakt einer Vier-Takt-Brennkraftmaschine nach einem der vorherigen Ansprüche, bei dem die Flüssigkeit Kraftstoff ist und zur Regeneration eines Partikelfilters die Abgastemperatur durch Oxidation des eingespritzten Kraftstoffes erhöht wird,
**dadurch gekennzeichnet, daß**
die Erhöhung der Abgastemperatur durch innermotorische Maßnahmen unterstützt wird.

6. Verfahren nach Anspruch 5,
**dadurch gekennzeichnet, daß**
die Erhöhung der Abgastemperatur durch mindestens eine Nacheinspritzung von Kraftstoff in den Brennraum unterstützt wird, vorzugsweise während der Expansionsphase eines Arbeitsspiels.

7. Verfahren nach Anspruch 5 oder 6,
**dadurch gekennzeichnet, daß**
die Erhöhung der Abgastemperatur durch eine Abgasrückführung unterstützt wird.

8. Verfahren nach einem der Ansprüche 5 bis 7, zum Einspritzen von Kraftstoff in den Abgastrakt eines Dieselmotors,
**dadurch gekennzeichnet, daß**
die Erhöhung der Abgastemperatur durch eine verstärkte Drosselung im Ansaugtrakt des Dieselmotors unterstützt wird.

9. Verfahren nach einem der Ansprüche 5 bis 8,
**dadurch gekennzeichnet, daß**
der eingespritzte Kraftstoff zumindest teilweise mittels eines Katalysators oxidiert wird.

10. Verfahren nach einem der Ansprüche 5 bis 9,
**dadurch gekennzeichnet, daß**
der Kraftstoff stromaufwärts einer im Abgastrakt vorgesehenen Turbine eingespritzt wird.

11. Verfahren nach einem der Ansprüche 5 bis 9,
**dadurch gekennzeichnet, daß**
der Kraftstoff stromabwärts einer im Abgastrakt vorgesehenen Turbine eingespritzt wird.

12. Vier-Takt-Brennkraftmaschine mit j Zylindern, zur Durchführung eines Verfahrens nach einem der vorherigen Ansprüche, bei der zum Einspritzen einer Flüssigkeit in den Abgastrakt mindestens eine Einspritzdüse im Abgastrakt angeordnet ist, wobei die mindestens eine Einspritzdüse mittels Motorsteuerung in der Art steuerbar ist, daß die mindestens eine Einspritzdüse in regelmäßigen Abständen einspritzt, wobei
ein Kurbelwellensensor vorgesehen ist, der mit der Motorsteuerung in Verbindung steht und Informationen über die Kurbelwellenstellung als Eingangssignal an die Motorsteuerung liefert, **dadurch gekennzeichnet, daß** die Kurbelwellenstellung in der Art zur Steuerung der mindestens einen Einspritzdüse dient, daß die mindestens eine Einspritzdüse bezogen auf einen Zylinder in regelmäßigen Abständen von 720°KW öffnet bzw. schließt.

13. Vier-Takt-Brennkraftmaschine nach Anspruch 12,
**dadurch gekennzeichnet, daß** ,
eine Turbine im Abgastrakt vorgesehen ist und die mindestens eine Einspritzdüse stromaufwärts der Turbine angeordnet ist.

14. Vier-Takt-Brennkraftmaschine nach Anspruch 12,
**dadurch gekennzeichnet, daß**
eine Turbine im Abgastrakt vorgesehen ist und die mindestens eine Einspritzdüse stromabwärts der Turbine angeordnet ist.

15. Vier-Takt-Brennkraftmaschine nach einem der Ansprüche 12 bis 14,
**dadurch gekennzeichnet, daß**
im Abgastrakt ein Katalysator und stromabwärts des Katalysators ein Partikelfilter angeordnet ist, wobei die mindestens eine Einspritzdüse stromaufwärts des Katalysators angeordnet ist, so daß ein mittels der mindestens einen Einspritzdüse eingespritzter Kraftstoff mit dem Katalysator oxidierbar ist.

16. Vier-Takt-Brennkraftmaschine nach einem der Ansprüche 12 bis 15,
**dadurch gekennzeichnet, daß**
im Abgastrakt ein System zur Abgasnachbehandlung von Stickoxiden vorgesehen wird, nämlich ein Stickoxidspeicherkatalysator oder ein SCR-Katalysator, wobei stromaufwärts dieses Systems eine Einspritzdüse vorgesehen ist.

## Claims

1. Method for injecting a fluid into the exhaust gas duct of a four-stroke internal combustion engine with j cylinders, for the purpose of regenerating a particle filter or storage catalyst or for injecting reducing agents for an SCR catalyst, in which method the fluid is injected at regular intervals by means of an injection nozzle provided in the exhaust gas duct, **characterized in that** injection of the fluid is performed with angular synchronism relative to a cylinder, i.e. at regular intervals of 720° crankshaft angle, such that virtually identical conditions are present in the exhaust gas duct at the injection nozzle upon each injection, assuming a constant rotational speed and constant load.

2. Method according to Claim 1, **characterized in that** j injections are performed for every two crankshaft revolutions.

3. Method according to Claim 1 or Claim 2, **characterized in that** injection of the fluid is performed if a pressure wave propagating through the exhaust gas duct has a maximum or a minimum in the area of the injection nozzle.

4. Method according to one of the preceding claims, **characterized in that** injection of the fluid is performed if a pulsating exhaust gas flow passing the injection nozzle has a maximum temperature in the area of the injection nozzle.

5. Method for injecting a fluid into the exhaust gas duct of a four-stroke internal combustion engine according to one of the preceding claims, in which the fluid is fuel and, for regeneration of a particle filter, the exhaust gas temperature is increased by oxidation of the injected fuel, **characterized in that** the increase in exhaust gas temperature is assisted by measures internal to the engine.

6. Method according to Claim 5, **characterized in that** the increase in exhaust gas temperature is assisted by at least one post-injection of fuel into the combustion chamber, preferably during the expansion phase of an operating cycle.

7. Method according to Claim 5 or Claim 6, **characterized in that** the increase in exhaust gas temperature is assisted by exhaust gas recirculation.

8. Method according to one of Claims 5 to 7 for injecting fuel into the exhaust gas duct of a diesel engine, **characterized in that** the increase in exhaust gas temperature is assisted by intensified throttling in the intake duct of the diesel engine.

9. Method according to one of Claims 5 to 8, **characterized in that** the injected fuel is oxidized at least in part by means of a catalyst.

10. Method according to one of Claims 5 to 9, **characterized in that** the fuel is injected upstream of a turbine provided in the exhaust gas duct.

11. Method according to one of Claims 5 to 9, **characterized in that** the fuel is injected downstream of a turbine provided in the exhaust gas duct.

12. Four-stroke internal combustion engine with j cylinders, for performing a method according to one of the preceding claims, in which, for injection of a fluid into the exhaust gas duct, at least one injection nozzle is arranged in the exhaust gas duct, the at least one injection nozzle being controllable by means of an engine control unit in such a manner that the at least one injection nozzle injects at regular intervals, a crankshaft sensor being provided which is connected to the engine control unit and supplies information about the crankshaft position to the engine control unit as an input signal, **characterized in that** the crankshaft position serves to control the at least one injection nozzle in such a manner that the at least one injection nozzle opens or closes at regular intervals of 720° crankshaft angle relative to a cylinder.

13. Four-stroke internal combustion engine according to Claim 12, **characterized in that** a turbine is provided in the exhaust gas duct and the at least one injection nozzle is arranged upstream of the turbine.

14. Four-stroke internal combustion engine according to Claim 12, **characterized in that** a turbine is provided in the exhaust gas duct and the at least one injection nozzle is arranged downstream of the turbine.

15. Four-stroke internal combustion engine according to one of Claims 12 to 14, **characterized in that** a catalyst is arranged in the exhaust gas duct and a particle filter is arranged downstream of the catalyst, the at least one injection nozzle being arranged upstream of the catalyst, such that fuel injected by means of the at least one injection nozzle may be oxidized using the catalyst.

16. Four-stroke internal combustion engine according to one of Claims 12 to 15, **characterized in that** a system for exhaust gas aftertreatment of nitrogen oxides, namely a nitrogen oxide storage catalyst or an SCR catalyst, is provided in the exhaust gas duct, an injection nozzle being provided upstream of this system.

## Revendications

1. Procédé d'injection d'un liquide dans le parcours des gaz d'échappement d'un moteur à combustion interne à quatre temps qui compte j cylindres, pour régénérer un filtre à particules ou un catalyseur accumulateur ou pour injecter des agents de réduction dans un catalyseur SCR, et dans lequel le liquide est injecté à intervalles réguliers au moyen d'un ajutage d'injection prévu dans le conduit des gaz d'échappement,
**caractérisé en ce que**
les injections de liquide sont réalisées de manière synchronisée sur l'angle de rotation d'un cylindre, c'est-à-dire à des intervalles réguliers de 720 °KW, de sorte que lors de chaque injection, en supposant que la vitesse de rotation et la charge sont constantes, des conditions presque identiques règnent dans le parcours des gaz d'échappement au niveau de l'ajutage d'injection.

2. Procédé selon la revendication 1, **caractérisé en ce que** j injections sont réalisées tous les deux tours du vilebrequin.

3. Procédé selon les revendications 1 ou 2, **caractérisé en ce que** l'injection de liquide est réalisée lorsqu'une onde de pression qui se propage dans le parcours des gaz d'échappement présente un maximum ou un minimum dans la zone de l'ajutage d'injection.

4. Procédé selon l'une des revendications précédentes, **caractérisé en ce que** l'injection de liquide est réalisée lorsqu'un écoulement pulsé du gaz d'échappement qui passe devant l'ajutage d'injection présente une température maximale dans la zone de l'ajutage d'injection.

5. Procédé d'injection d'un liquide dans le parcours des gaz d'échappement d'un moteur à combustion interne à quatre temps selon l'une des revendications précédentes, dans lequel le liquide est un carburant et dans lequel la température des gaz d'échappement est augmentée par oxydation du carburant injecté en vue de régénérer un filtre à particules,
**caractérisé en ce que**
l'augmentation de la température des gaz d'échappement est soutenue par des dispositions prises à l'intérieur du moteur.

6. Procédé selon la revendication 5, **caractérisé en ce que** l'augmentation de la température des gaz d'échappement est soutenue par au moins une post-injection de carburant dans la chambre de combustion, de préférence pendant la phase de détente d'un cycle de travail.

7. Procédé selon les revendications 5 ou 6, **caractérisé en ce que** l'augmentation de la température des gaz d'échappement est soutenue par un recyclage des gaz d'échappement.

8. Procédé selon l'une des revendications 5 à 7 pour l'injection de carburant dans le parcours des gaz d'échappement d'un moteur diesel, **caractérisé en ce que** l'augmentation de la température des gaz d'échappement est soutenue par un étranglement renforcé du parcours d'aspiration du moteur diesel.

9. Procédé selon l'une des revendications 5 à 8, **caractérisé en ce que** le carburant injecté est oxydé au moins en partie au moyen d'un catalyseur.

10. Procédé selon l'une des revendications 5 à 9, **caractérisé en ce que** le carburant est injecté en amont d'une turbine prévue dans le parcours des gaz d'échappement.

11. Procédé selon l'une des revendications 5 à 9, **caractérisé en ce que** le carburant est injecté en aval d'une turbine prévue dans le parcours des gaz d'échappement.

12. Moteur à combustion interne à quatre temps comptant j cylindres en vue de la mise en oeuvre d'un procédé selon l'une des revendications précédentes, dans lequel au moins un ajutage d'injection est disposé dans le parcours des gaz d'échappement pour injecter un liquide dans le parcours des gaz d'échappement, le ou les ajutages d'injection pouvant être commandés par la commande du moteur de telle sorte que le ou les ajutages d'injection injectent à intervalles réguliers, une sonde de vilebrequin qui communique avec la commande du moteur et qui délivre à la commande du moteur des informations sur la position du vilebrequin en tant que signal d'entrée étant prévue sur le vilebrequin, **caractérisé en ce que** la position du vilebrequin sert à commander le ou les ajutages d'injection de telle sorte qu'au moins un ajutage d'injection s'ouvre ou se ferme à des intervalles réguliers de 720 °KW par rapport à un cylindre.

13. Moteur à combustion interne à quatre temps selon la revendication 12, **caractérisé en ce qu'**une turbine est prévue dans le parcours des gaz d'échappement et **en ce que** le ou les ajutages d'injection sont disposés en amont de la turbine.

14. Moteur à combustion interne à quatre temps selon la revendication 12, **caractérisé en ce qu'**une turbine est prévue dans le parcours des gaz d'échappement et **en ce que** le ou les ajutages d'injection sont disposés en aval de la turbine.

15. Moteur à combustion interne à quatre temps selon l'une des revendications 12 à 14, **caractérisé en ce qu'**un catalyseur est disposé dans le parcours des gaz d'échappement et un filtre à particules est disposé en aval du catalyseur, le ou les ajutages d'injection étant disposés en amont du catalyseur de telle sorte que le carburant injecté au moyen du ou des ajutages d'injection puisse être oxydé à l'aide du catalyseur.

16. Moteur à combustion interne à quatre temps selon l'une des revendications 12 à 15, **caractérisé en ce qu'**un système de traitement final des oxydes d'azote des gaz d'échappement, à savoir un catalyseur accumulateur d'oxydes d'azote ou un catalyseur SCR, est prévu dans le parcours des gaz d'échappement, un ajutage d'injection étant prévu en amont de ce système.
